# EUROPEAN PATENT SPECIFICATION

(11) **EP 2 665 112 B1**
(45) Date of publication and mention of the grant of the patent: **16.11.2016**
(21) Application number: 11855283.5
(22) Date of filing: 13.01.2011
(51) Int. Cl.: H01M 4/1393, H01M 4/04, H01M 4/13

(54) **ELECTRODE MATERIAL APPLYING APPARATUS AND FILTERING METHOD**
VORRICHTUNG FÜR ELEKTRODENMATERIALAUFTRAGUNG UND FILTERUNGSMETHODE
APPAREIL D'APPLICATION DE MATÉRIAU D'ÉLECTRODE ET MÉTHODE DE FILTRAGE

(43) Date of publication of application: 20.11.2013
(73) Proprietor: Toyota Jidosha Kabushiki Kaisha, Toyota-shi, Aichi 471-8571 (JP)
(72) Inventor: UCHIDA, Yozo, Toyota-shi Aichi 471-8571 (JP)
(74) Representative: TBK
(86) International application number: PCT/JP2011/050431
(87) International publication number: WO 2012/095975

(56) References cited:
- JP-A- 2000 005 525
- JP-A- 2003 334 564
- JP-A- 2009 301 942
- JP-A- 2010 049 873
- JP-A- 2010 135 238
- US-A1- 2004 173 531

## Description

The present invention relates to an electrode material applying apparatus according to the preamble of claim 1 and a filtering method according to the preamble of claim 5. The electrode material applying apparatus can be particularly used as an apparatus for applying an electrode mixture on a current collector in relation to, for example, secondary batteries. The filtering apparatus can be used for filtering an electrode mixture.

As used herein, the term "secondary batteries" generally refers to rechargeable capacitor devices. The secondary batteries include, for example, lithium-ion secondary batteries. As used herein, the term "lithium-ion secondary batteries" refers to secondary batteries which utilize lithium ions as electrolyte ions and are charged and discharged by transfer of electrons accompanying lithium ions between positive and negative electrodes.

Document US 2004/173531 A1 discloses the features in the preambles of claims 1 and 5, respectively and is considered closest prior art. Document JP 2009-301942 A discloses a method for producing lithium-ion secondary batteries in which positive electrode slurry for formation of a positive electrode and negative electrode slurry for formation of a negative electrode are filtered, thereby removing fine metal powder contaminated during production procedures and coarse powder contained in raw material powder.

Negative electrode slurry may contain, for example, an electrode active material, graphite, dispersed in a solvent. The slurry is applied on, for example, a metal foil which is then dried and extended by applying pressure. The slurry may contain large particles resulting from excessive aggregation of the electrode active material, a binder or a thickener in the solvent. When the metal foil is a strip-shaped sheet material, the slurry is applied continuously on the travelling metal foil, for example. If the slurry contains large particles at this occasion, the particles may clog up an application path. The slurry may not be applied where the particles clog up, resulting in formation of streaks devoid of slurry (coating stripes) on the metal foil. Because of this, it is desirable to remove large particles from the slurry. In other words, it is desirable that the particles in the slurry have an approximately uniform particle diameter. In order to achieve this, the slurry may be filtered through a filter before application in some cases.

The slurry is applied on the metal foil at a predetermined areal weight. Therefore the slurry has a certain viscosity so that dripping of the slurry during application thereof on the metal foil and significant variation in the thickness (areal weight) are prevented. Such slurry tends to exhibit dilatancy behavior and has increased resistance upon filtration with a filter having finer meshes. In order to allow slurry to pass through a filter having fine meshes, pressure applied to the slurry needs to be increased. In addition, due to the dilatancy behavior, less slurry can pass through the filter with increased pressure applied to the slurry. Due to these reasons, clogging of the filter tends to occur when the filter used has finer meshes. In order to avoid this, the meshes of the filter may be forced to be rough to some extent. When slurry is filtered through a filter having rough meshes, the only particles which can be removed are those having large particle diameters. As described above, filtration of slurry through a filter having fine meshes may not be simply and successfully carried out.

It is the object of the invention to provide an electrode material applying apparatus and a slurry filtering method capable of filtration of slurry through a filter having fine meshes.

The object of the invention is achieved by an electrode material applying apparatus according to claim 1 and by a method according to claim 5, respectively. Advantageous embodiments are carried out according to the dependent claims.

An electrode material applying apparatus according to the present invention includes: a flow path which allows passage of slurry containing at least graphite particles dispersed in a solvent; a filter disposed in the flow path; a magnet disposed so as to generate, on the filter, a magnetic field having magnetic lines of force extending along the flow path; and an applying member which applies, on a current collector, the slurry having passed through the filter.

The electrode material applying apparatus allows orientation of graphite particles along the flow path due to the effect of the magnetic field during passage thereof through the filter formed in the flow path. This facilitates passage of the slurry containing at least graphite particles dispersed in the solvent through the filter and reduces clogging of the filter. Therefore the filter having finer meshes can be used, resulting in removal of finer aggregates and foreign materials in slurry.

In this case, the magnet may be formed of a pair of magnets which are disposed so as to sandwich the filter along the flow path and respectively have magnetic polarities attracting each other at portions facing the filter. The magnet may be formed of a permanent magnet or an electromagnet.

The present invention is, in terms of a method for filtering slurry, a method for filtering slurry by supplying slurry containing at least graphite particles dispersed in a solvent to a flow path while generating, on a filter disposed in the flow path, a magnetic field having magnetic lines of force extending along the flow path. The method for filtering slurry may cause reduced clogging of the filter. Therefore the filter having finer meshes can be used, resulting in removal of finer aggregates and foreign materials in slurry.

The filtration method may contribute to improvement in performances of secondary batteries because finer aggregates and foreign materials in slurry can be removed. Because of this, the filtration method is suitably used for filtration of slurry in a method for producing secondary batteries including the step of applying slurry on a current collector. For example, the method for producing secondary batteries may include the steps of filtering slurry by the method for filtering slurry and applying, on a current collector, the slurry filtered in the step of filtering.

### Brief Description of Drawings

Fig. 1 is a view showing an example of the configuration of a lithium-ion secondary battery;
Fig. 2 is a view showing a wound electrode assembly of a lithium-ion secondary battery;
Fig. 3 is a section view showing the section along III-III of Fig. 2;
Fig. 4 is a section view showing the configuration of a positive electrode mixture layer;
Fig. 5 is a section view showing the configuration of a negative electrode mixture layer;
Fig. 6 is a side view showing a welded part between an uncoated part of a wound electrode assembly and an electrode terminal;
Fig. 7 is a view schematically showing the state of a lithium-ion secondary battery during charge;
Fig. 8 is a view schematically showing the state of a lithium-ion secondary battery during discharge;
Fig. 9 is a view showing a step during production of a secondary battery according to one embodiment of the present invention;
Fig. 10 is a view showing an example of a filtering apparatus;
Fig. 11 is a conceptual view of filtration of slurry through a filter when a filtering apparatus does not contain a magnet;
Fig. 12 is a view showing typical examples of dilatancy behavior of slurry;
Fig. 13 is a conceptual view of filtration of slurry through a filter according to one embodiment of the present invention;
Fig. 14 is a view showing another example of a filtering apparatus; and
Fig. 15 is a view showing a vehicle containing a secondary battery.

A secondary battery to which the present invention may be applied is herein briefly exemplified by the structure of a lithium-ion secondary battery. A method for producing a secondary battery and an electrode material applying apparatus according to an embodiment of the present invention are then illustrated by referring to the figures. The members and parts having similar functions are appropriately designated by the same symbols. All figures are schematically depicted and do not always reflect the real matters.

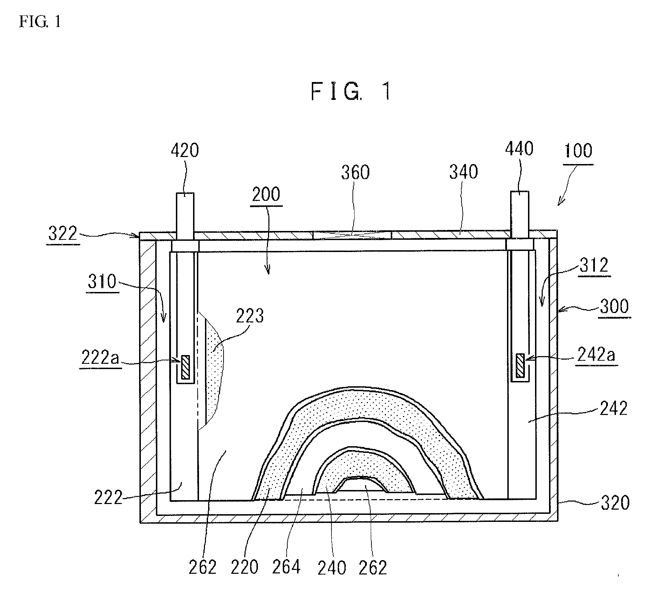

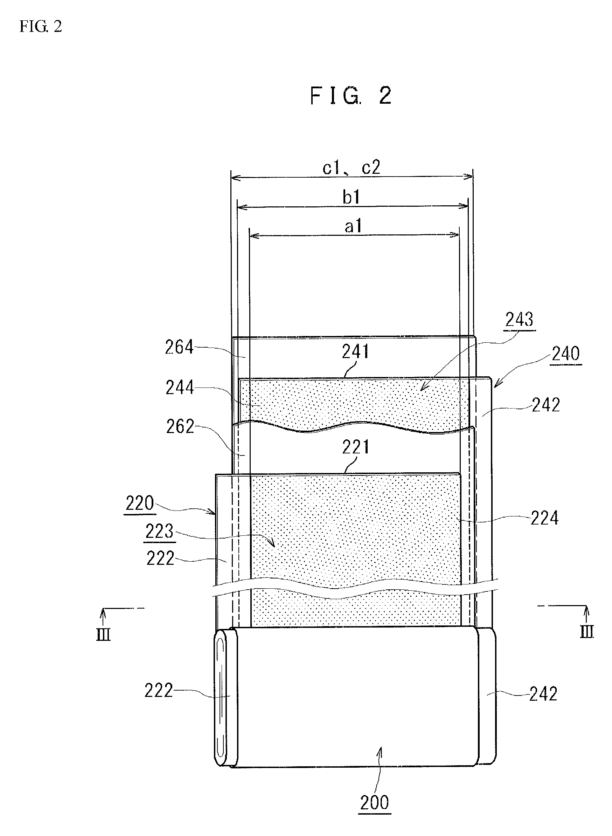

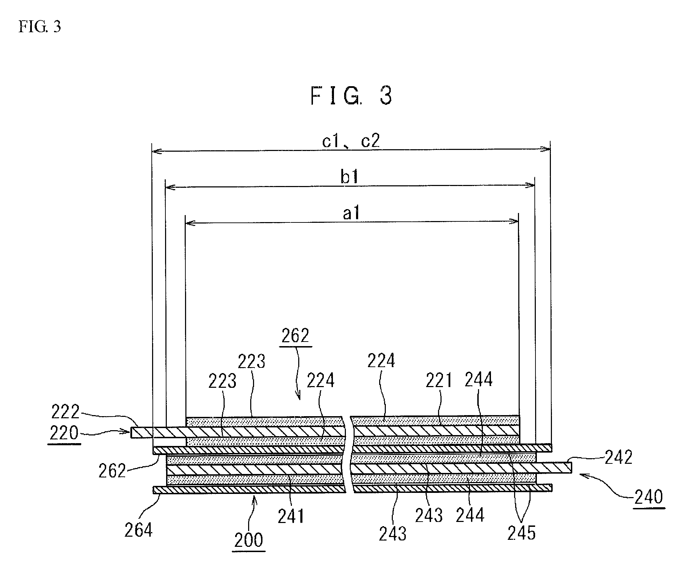

Fig. 1 shows a lithium-ion secondary battery 100. The lithium-ion secondary battery 100 comprises, as shown in Fig. 1, a wound electrode assembly 200 and a battery case 300. Fig. 2 shows the wound electrode assembly 200. Fig. 3 shows the section along III-III of Fig. 2.

The wound electrode assembly 200 has, as shown in Figs. 2 and 3, a positive electrode sheet 220, a negative electrode sheet 240 and separators 262 and 264. The positive electrode sheet 220, the negative electrode sheet 240 and the separators 262 and 264 are respectively strip-shaped sheet materials.

### Positive electrode sheet 220

The positive electrode sheet 220 has, as shown in Figs. 2 and 3, a strip-shaped positive electrode current collector 221 (positive electrode core material). The positive electrode current collector 221 may suitably contain a metal foil suitable for positive electrodes. The positive electrode current collector 221 contains a strip-shaped aluminum foil having a predetermined width. The positive electrode sheet 220 has an uncoated part 222 and a positive electrode mixture layer 223. The uncoated part 222 is defined along the edge on one side in the width direction of the positive electrode current collector 221. The positive electrode mixture layer 223 is formed by applying a positive electrode mixture 224 containing a positive electrode active material. The positive electrode mixture 224 is applied on both sides of the positive electrode current collector 221 except for the uncoated part 222 defined on the positive electrode current collector 221.

### Positive electrode mixture layer 223 and positive electrode active material 610

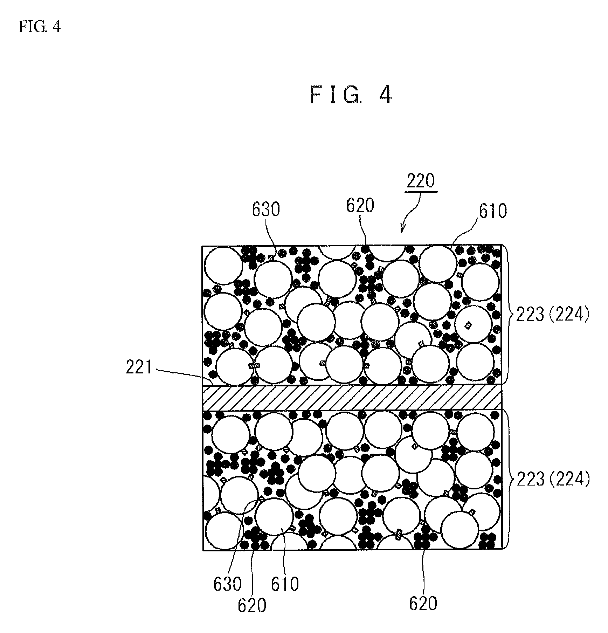

Fig. 4 is a section view of the positive electrode sheet 220 in the lithium-ion secondary battery 100. In Fig. 4, the positive electrode active material 610, a conducting material 620 and a binder 630 in the positive electrode mixture layer 223 are schematically enlarged in order to clearly show the structure of the positive electrode mixture layer 223.

The positive electrode mixture layer 223 contains, as shown in Fig. 4, the positive electrode active material 610, the conducting material 620 and the binder 630. The positive electrode active material 610 may be a material for positive electrode active materials of lithium-ion secondary batteries. Examples of the positive electrode active material 610 include lithium transition metal oxides such as LiNiCoMnO₂ (lithium nickel cobalt manganese composite oxide), LiNiO₂ (lithium nickel oxide), LiCoO₂ (lithium cobalt oxide), LiMn₂O₄ (lithium manganese oxide), LiFePO₄ (lithium iron phosphate) and the like. LiMn₂O₄ has, for example, the spinel structure. LiNiO₂ and LiCoO₂ have the laminar rock salt structure. LiFePO₄ has, for example, the olivine structure. LiFePO₄ having the olivine structure may include, for example, particles of the order of nanometers. LiFePO₄ having the olivine structure may be covered by a carbon film.

### Conducting material 620

The conducting material 620 may be exemplified by, for example, carbon materials such as carbon powder, carbon fiber and the like, from which one type or two or more types in combination may be used as the conducting material. Carbon powder may be various carbon black (e.g., acetylene black, oil furnace black, graphitized carbon black, carbon black, graphite, ketjen black), graphite powder and the like.

### Binder 630

The binder 630 binds particles of the positive electrode active material 610 and the conducting material 620 and binds these particles with the positive electrode current collector 221. The binder 630 may be a polymer soluble or dispersible in the solvent used. For example, in a positive electrode mixture composition containing an aqueous solvent, watersoluble or water-dispersible polymers may be preferably used including cellulose polymers such as carboxymethylcellulose (CMC), hydroxypropyl methylcellulose (HPMC) and the like, fluororesins such as polyvinyl alcohol (PVA), polytetrafluoroethylene (PTFE), tetrafluoroethylene-hexafluoropropylene copolymers (FEPs) and the like, rubbers such as vinyl acetate copolymers, styrene butadiene rubbers (SBRs), acrylic SBR resins (SBR latexes) and the like. In a positive electrode mixture composition containing a non-aqueous solvent, polymers such as polyvinylidene fluoride (PVDF), polyvinylidene chloride (PVDC), polyacrylonitrile (PAN) and the like may be preferably used. The exemplified polymer materials may be used for, in addition to providing the function as a binder, providing the function as a thickener or other additives to the composition.

### Thickener and solvent

The positive electrode mixture layer 223 may be formed, for example, by preparing the paste (slurry) positive electrode mixture 224 from the positive electrode active material 610 and the conducting material 620 mixed in a solvent and applying the mixture on the positive electrode current collector 221 which is then dried and extended by applying pressure. Any aqueous and non-aqueous solvents can be used. A suitable non-aqueous solvent may be exemplified by N-methyl-2-pyrroridone (NMP).

The mass ratio of the positive electrode active material in the whole positive electrode mixture is preferably about 50 wt% or more (typically 50 to 95 wt%) and is generally and more preferably about 70 to 95 wt% (e.g. 75 to 90 wt%). The ratio of the conducting material in the whole positive electrode mixture may be, for example, about 2 to 20 wt% and is generally and preferably about 2 to 15 wt%. When a binder is included in the composition, the ratio of the binder in the whole positive electrode mixture may be, for example, about 1 to 10 wt% and is generally and preferably about 2 to 5 wt%.

### Negative electrode sheet 240

The negative electrode sheet 240 has, as shown in Fig. 2, a stripe-shaped negative electrode current collector 241 (negative electrode core material). The negative electrode current collector 241 may suitably contain a metal foil suitable for negative electrodes. In this embodiment, the negative electrode current collector 241 contains a strip-shaped copper foil having a predetermined width. The negative electrode sheet 240 also has an uncoated part 242 and a negative electrode mixture layer 243. The uncoated part 242 is defined along the edge on one side in the width direction of the negative electrode current collector 241. The negative electrode mixture layer 243 is formed by applying a negative electrode mixture 244 containing a negative electrode active material. The negative electrode mixture 244 is applied on both sides of the negative electrode current collector 241 except for the uncoated part 242 defined on the negative electrode current collector 241.

### Negative electrode mixture 244

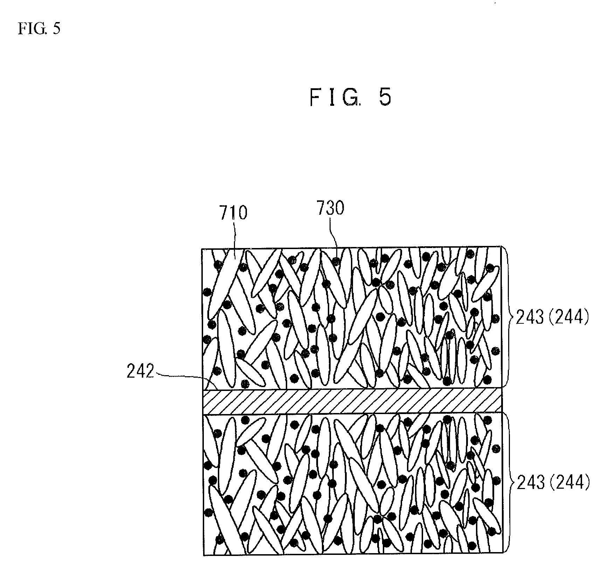

Fig. 5 is a section view of the negative electrode sheet 240 in the lithium-ion secondary battery 100. In Fig. 5, the negative electrode active material 710 and a binder 730 in the negative electrode mixture layer 243 are schematically enlarged in order to clearly show the structure of the negative electrode mixture layer 243. This figure illustrates the negative electrode active material 710 which is so-called flake graphite. The negative electrode active material 710 is not limited to the example shown in Fig. 5. The negative electrode mixture layer 243 also contains, as shown in Fig. 5, the negative electrode active material 710, a thickener (not shown), the binder 730 and the like.

### Negative electrode active material 710

The negative electrode active material may include, for example, graphite (carbon materials) such as natural graphite, artificial graphite, amorphous carbon of natural or artificial graphite. The negative electrode active material is conductive per se. In this example, as shown in Fig. 3, the negative electrode mixture layer 243 is further provided with a heat-resistant layer (HRL) 245 on the surface. The heat-resistant layer 245 may be mainly formed of a metal oxide (e.g. alumina). This lithium-ion secondary battery 100 contains the negative electrode mixture layer 243 onto which the heat-resistant layer 245 is formed. Although it is not shown in the figure, the heat-resistant layer may be formed on the separators 262 and 264.

### Negative electrode active material

One, two or more materials for conventional lithium-ion secondary batteries may be used as the negative electrode active material without particular limitation. The negative electrode active material may include, for example, particulate carbon materials (carbon particles) at least partially having a graphite structure (laminar structure). More specifically, carbon materials such as so-called graphite, hard carbon, soft carbon and combinations thereof can be used. For example, graphite particles such as natural graphite can be used. Alternatively, the negative electrode active material may be natural graphite coated with amorphous carbon thereon.

The ratio of the negative electrode active material in the whole negative electrode mixture may be, but not limited to, about 80 wt% or more (e.g. 80 to 99 wt%). The ratio of the negative electrode active material in the whole negative electrode mixture is preferably about 90 wt% or more (e.g. 90 to 99 wt%, more preferably 95 to 99 wt%). The ratio of the binder 730 in the whole negative electrode mixture may be, for example, about 0.5 to 10 wt% and is generally and preferably about 0.5 to 5 wt%.

### Separators 262 and 264

The separators 262 and 264 separate the positive electrode sheet 220 and the negative electrode sheet 240. In this example, the separators 262 and 264 are formed by strip-shaped sheet materials having a plurality of minute pores and having a predetermined width. The separators 262 and 264 may be, for example, a single-layer separator or a laminated separator formed of a porous polyolefin resin. In this example, as shown in Figs. 2 and 3, the negative electrode mixture layer 243 has the width b1 slightly wider than the width a1 of the positive electrode mixture layer 223. The separators 262 and 264 respectively has the width c1 and c2 slightly wider than the width b1 of the negative electrode mixture layer 243 (c1 and c2 > b1 > al).

### Wound electrode assembly 200

The positive electrode sheet 220 and the negative electrode sheet 240 of the wound electrode assembly 200 are stacked and wound with the separators 262 and 264 existing therebetween.

In this example, the positive electrode sheet 220, the negative electrode sheet 240 and the separators 262 and 264 are, as shown in Fig 2, aligned in the length direction and stacked in the order of the positive electrode sheet 220, the separator 262, the negative electrode sheet 240 and the separator 264. The separators 262 and 264 are respectively stacked on the positive electrode mixture layer 223 and the negative electrode mixture layer 243. The negative electrode mixture layer 243 has a width slightly wider than that of the positive electrode mixture layer 223 and is stacked so as to cover the positive electrode mixture layer 223. This further ensures transfer of lithium ions (Li) between the positive electrode mixture layer 223 and the negative electrode mixture layer 243 upon charge and discharge.

The uncoated part 222 of the positive electrode sheet 220 and the uncoated part 242 of the negative electrode sheet 240 are stacked so as to protrude at the opposite ends in the width direction of the separators 262 and 264. The stacked sheet materials (e.g. positive electrode sheet 220) are wound around a winding axis defined in the width direction.

The wound electrode assembly 200 is obtained by winding while stacking the positive electrode sheet 220, the negative electrode sheet 240 and the separators 262 and 264 in the predetermined order. In this step, these sheets are stacked while controlling the positions thereof by a position adjustment mechanism such as an edge position control (EPC). In this occasion, the negative electrode mixture layer 243 is stacked so as to cover the positive electrode mixture layer 223 with the separators 262 and 264 existing therebetween.

### Battery case 300

In this example, the battery case 300 is, as shown in Fig. 1, a so-called rectangular battery case comprising a case body 320 and a lid 340. The case body 320 is square tubular with a bottom and is a flat box-shaped container with one side (upper side) being opened. The lid 340 is a member provided at an opening (opening on the upper side) of the case body 320 in order to close the opening.

Secondary batteries for vehicles are desired to have improved weight energy efficiency (battery capacity per unit weight) in order to improve the fuel consumption. Therefore the case body 320 and the lid 340 of the battery case 300 are desirably formed of a light-weight metal such as aluminum, aluminum alloy and the like (in this example, aluminum). Accordingly the weight energy efficiency can be improved.

The battery case 300 has a flat rectangular inner space for harboring the wound electrode assembly 200. As shown in Fig. 1, the flat inner space of the battery case 300 has a horizontal width slightly wider than that of the wound electrode assembly 200. In this embodiment, the battery case 300 harbors the wound electrode assembly 200 in the inner space. The wound electrode assembly 200 is, as shown in Fig. 1, deformed so as to be flat in one direction perpendicular to the winding axis in order to be harbored in the battery case 300.

In this embodiment, the battery case 300 comprises a square tubular case body 320 having a bottom and a lid 340 for closing an opening of the case body 320. The case body 320 can be obtained by, for example, deep draw molding or impact molding. The impact molding is a type of cold forging and is also referred to as impact extrusion process or impact press.

The lid 340 of the battery case 300 is attached with electrode terminals 420 and 440. The electrode terminals 420 and 440 penetrate the battery case 300 (lid 340) to be exposed at the outside of the battery case 300. The lid 340 is also provided with a safety valve 360.

In this example, the wound electrode assembly 200 is attached to the electrode terminals 420 and 440 attached to the battery case 300 (in this example, lid 340). The wound electrode assembly 200 is pressed and bent to be flat in one direction perpendicular to the winding axis so as to be harbored in the battery case 300. The wound electrode assembly 200 also has the uncoated part 222 of the positive electrode sheet 220 and the uncoated part 242 of the negative electrode sheet 240 protruding at the opposite sides in the width direction of the separators 262 and 264. Among these, a first electrode terminal 420 is fixed at the uncoated part 222 of the positive electrode current collector 221 and a second electrode terminal 440 is fixed at the uncoated part 242 of the negative electrode current collector 241.

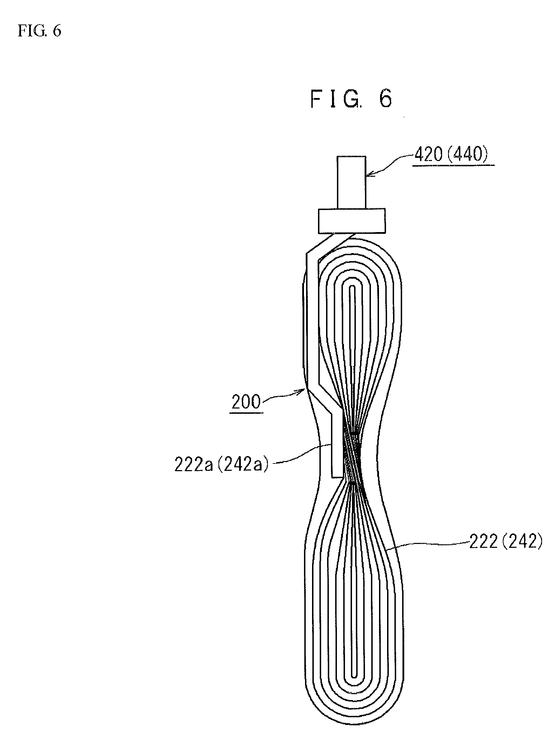

In this example, as shown in Fig. 1, the electrode terminals 420 and 440 at the lid 340 extend to middle parts 222a and 242a of the uncoated parts 222 and 242 of the wound electrode assembly 200. The electrode terminals 420 and 440 are welded at their tips to the respective middle parts of the uncoated parts 222 and 242. Fig. 6 is a side view showing a welded part of the uncoated part 222 or 242 of the wound electrode assembly 200 with the electrode terminal 420 or 440.

On both sides of the separators 262 and 264, the uncoated part 222 of the positive electrode current collector 221 and the uncoated part 242 of the negative electrode current collector 241 are spirally exposed. As shown in Fig. 6, in this embodiment, the uncoated part 222 or 242 is brought together at its middle part to weld on to the tip of the electrode terminal 420 or 440, respectively. Because of the difference in materials, the electrode terminal 420 is welded to the positive electrode current collector 221 by, for example, ultrasonic welding. The electrode terminal 440 is welded to the negative electrode current collector 241 by, for example, resistance welding.

As described above, the wound electrode assembly 200 is attached to the electrode terminals 420 and 440 fixed to the lid 340 while it is pressed and bent to be flat. This wound electrode assembly 200 is harbored in a flat inner space of the case body 320. The case body 320 harboring the wound electrode assembly 200 is closed with the lid 340. A joining part 322 (see Fig. 1) of the lid 340 and the case body 320 may be, for example, welded and sealed by laser welding. As described above, in this example, the wound electrode assembly 200 is positioned in the battery case 300 by means of the electrode terminals 420 and 440 fixed to the lid 340 (battery case 300).

### Electrolyte

An electrolyte is then injected into the battery case 300 through a liquid injection pore provided on the lid 340. In this example, the electrolyte contains LiPF₆ at a concentration of about 1 mol/liter in a mixed solvent of ethylene carbonate and diethyl carbonate (e.g. mixed solvent of about 1:1 volume ratio). The liquid injection pore is then attached with a metal sealing cap (e.g. by welding) in order to seal the battery case 300. The electrolyte may be a non-aqueous electrolyte conventionally used for lithium-ion secondary batteries.

### Gas evacuation path

In this example, the flat inner space of the battery case 300 is slightly larger than the wound electrode assembly 200 deformed to be flat. The wound electrode assembly 200 is provided with on both sides thereof gaps 310 and 312 between the wound electrode assembly 200 and the battery case 300, which serve as gas evacuation paths.

The lithium-ion secondary battery 100 having the above configuration has increased temperature when it is overcharged. When the lithium-ion secondary battery 100 has high temperature, the electrolyte is decomposed to produce gas. The produced gas is smoothly exhausted outside through the gaps 310 and 312 on both sides of the wound electrode assembly 200 and between the wound electrode assembly 200 and the battery case 300 as well as through the safety valve 360. In the lithium-ion secondary battery 100, the positive electrode current collector 221 and the negative electrode current collector 241 are electrically connected to external devices through the electrode terminals 420 and 440 penetrating the battery case 300.

### Positive electrode mixture layer 223 and negative electrode mixture layer 243

As shown in Fig. 4, in this embodiment, the positive electrode mixture 224 is applied on both sides of the positive electrode current collector 221. The layer of the positive electrode mixture 224 (positive electrode mixture layer 223) contains the positive electrode active material 610 and the conducting material 620. As shown in Fig. 5, the negative electrode mixture 244 is applied on both sides of the negative electrode current collector 241. The layer of the negative electrode mixture 244 (negative electrode mixture layer 243) contains the negative electrode active material 710.

### Voids

The positive electrode mixture layer 223 contains fine gaps which may also be referred to as hollow spaces between, for example, the particles of the positive electrode active material 610 and the conducting material 620. The electrolyte (not shown) can infiltrate into the fine gaps of the positive electrode mixture layer 223. The negative electrode mixture layer 243 contains fine gaps which may also be referred to as hollow spaces between, for example, particles of the negative electrode active material 710. The electrolyte (not shown) can infiltrate into the fine gaps of the negative electrode mixture layer 243. The gaps (hollow spaces) are herein referred to as "voids".

The behavior of the lithium-ion secondary battery 100 during charge and discharge is hereinbelow illustrated.

### Behavior during charge

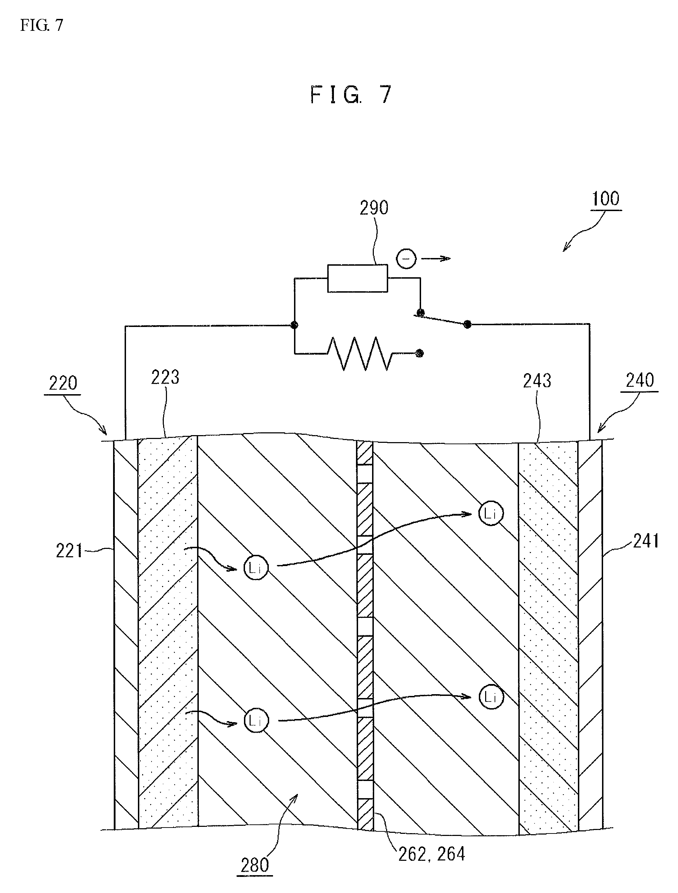

Fig. 7 schematically shows the state of the lithium-ion secondary battery 100 during charge. During charge, as shown in Fig. 7, the electrode terminals 420 and 440 (see Fig. 1) of the lithium-ion secondary battery 100 are connected to a charger 290. Due to the action of the charger 290, lithium ions (Li) are released from the positive electrode active material 610 (see Fig. 4) in the positive electrode mixture layer 223 to the electrolyte 280 during charge. Electrons are also released from the positive electrode active material 610 (see Fig. 4). The released electrons are transported through the conducting material 620 to the positive electrode current collector 221 as shown in Fig. 7 and further to the negative electrode through the charger 290. In the negative electrode, electrons are stored and lithium ions (Li) in the electrolyte 280 are absorbed and stored in the negative electrode active material 710 (see Fig. 5) in the negative electrode mixture layer 243.

### Behavior during discharge

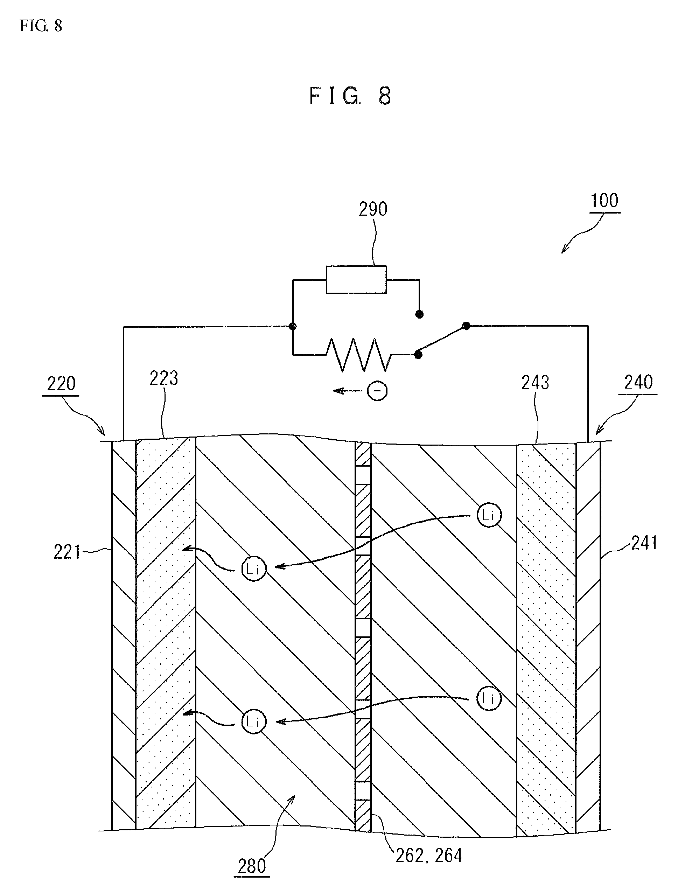

Fig. 8 schematically shows the state of the lithium-ion secondary battery 100 during discharge. During discharge, as shown in Fig. 8, electrons are transported from the negative electrode to the positive electrode while lithium ions (Li ions) stored in the negative electrode mixture layer 243 are released into the electrolyte 280. In the positive electrode, lithium ions (Li) in the electrolyte 280 are incorporated into the positive electrode active material 610 in the positive electrode mixture layer 223.

As described above, during charge and discharge of the lithium-ion secondary battery 100, lithium ions (Li) are transferred back and forth between the positive electrode mixture layer 223 and the negative electrode mixture layer 243 via the electrolyte 280. Because of this, in the positive electrode mixture layer 223, the positive electrode active material 610 (see Fig. 4) and the negative electrode active material 710 (see Fig. 5) desirably have in the vicinity thereof certain voids which allow infiltration of the electrolyte 280 and smooth diffusion of lithium ions. According to this configuration, sufficient lithium ions can exist in the vicinity of the positive electrode active material 610 and the negative electrode active material 710. Accordingly, lithium ions (Li) can be smoothly transferred between the electrolyte 280 and the positive electrode active material 610 and between the electrolyte 280 and the negative electrode active material 710.

During charge, electrons are transported to the positive electrode current collector 221 from the positive electrode active material 610 via the conducting material 620. On the other hand, during discharge, electrons are transported back to the positive electrode active material 610 from the positive electrode current collector 221 via the conducting material 620. The positive electrode active material 610 has poor conductivity because it is formed of a lithium transition metal oxide. Therefore electrons are transported between the positive electrode active material 610 and the positive electrode current collector 221 mainly via the conducting material 620.

As described above, it is believed that the battery can be effectively and rapidly charged if lithium ions (Li) and electrons are transported as smoothly as possible during charge. It is also believed that the power of the battery is improved if lithium ions (Li) and electrons are transported as smoothly as possible during discharge, resulting in decreased resistance and increased discharge amount of the battery.

### Other modes of batteries

An example of lithium-ion secondary batteries has been described hereinabove. The lithium-ion secondary batteries are not limited to the above mode. Similar electrode sheets containing electrode mixtures applied on current collectors are used for other various modes of batteries. Other known modes of batteries include, for example, cylindrical batteries, laminated batteries and the like. The cylindrical batteries contain wound electrode assemblies harbored in cylindrical battery cases. The laminated batteries contain positive electrode sheets and negative electrode sheets laminated with separators existing therebetween.

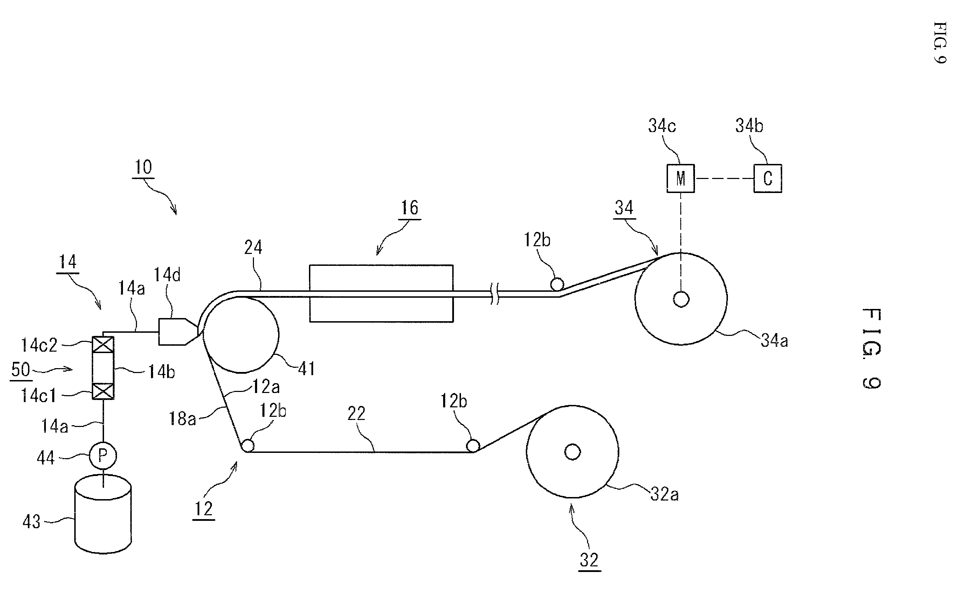

A method for producing the secondary battery, particularly an electrode material applying apparatus, according to an embodiment of the present invention is hereinbelow illustrated by referring to the figures. Fig. 9 is a view showing a production apparatus which realizes the electrode material applying apparatus.

The method for producing a secondary battery comprises, as shown in Fig. 9, the step of applying (14) a mixture 24 to a current collector 22 and the step of drying (16) the mixture 24 applied on the current collector 22. In this embodiment, the step of producing (10) an electrode sheet, which is a step in the method for producing a secondary battery, involves a traveling path 12, an electrode material applying apparatus 14 and a drying furnace 16.

### Current collector 22

A preferable embodiment of the current collector 22 is a metal foil such as copper (Cu), aluminium (Al) and the like. The current collector 22 is not necessarily limited to a metal foil. The current collector 22 may be, for example, a resin rendered to be conductive. The resin rendered to be conductive may be a film material of, for example, a polypropylene film deposited with aluminium or copper.

### Mixture 24

The mixture 24 is slurry containing at least graphite particles dispersed in a solvent. The graphite particles may include, for example, graphite, hard carbon, soft carbon, natural graphite and a material containing natural graphite coated with amorphous carbon. The solvent may be any aqueous solvents and non-aqueous solvents. An example of a suitable non-aqueous solvent may include N-methyl-2-pyrrolidone (NMP). The mixture 24 includes, for examples, slurry containing at least graphite particles dispersed in the solvent, for example, a negative electrode mixture which is used for production of lithium-ion secondary batteries.

### Traveling path 12

The traveling path 12 allows the current collector 22 traveling thereon. In this embodiment, the traveling path 12 is provided with a plurality of guides along a predetermined path onto which the current collector 22 is allowed to travel. The traveling path 12 is provided with, at the starting edge thereof, a supply member 32 which supplies the current collector 22. The supply member 32 contains the current collector 22 which is preliminarily wound up on a wind-up core 32a. The supply member 32 appropriately supplies a suitable amount of current collector 22 to the traveling path 12. The traveling path 12 is provided with, at the end edge thereof, a collecting member 34 which collects the current collector 22. The collecting member 34 winds up the current collector 22 which has been processed as required on the traveling path 12 onto a wind-up core 34a. In this embodiment, the collecting member 34 is provided with, for example, a controller 34b and a motor 34c. The controller 34b stores a program which is preliminarily configured to control the rotation of the wind-up core 34a of the collecting member 34. The motor 34c serves as an actuator which rotates and drives the wind-up core 34a according to the program stored in the controller 34b. The traveling path 12 is provided with the electrode material applying apparatus 14 and the drying furnace 16 in this order.

### Electrode material applying apparatus 14 (applying step)

The electrode material applying apparatus 14 comprises, as shown in Fig. 9, a flow path 14a, a filter 14b, magnets 14c1 and 14c2 and an applying member 14d. In this embodiment, the electrode material applying apparatus 14 is configured to apply the mixture 24 to the current collector 22 traveling on a back roll 41 arranged on the traveling path 12. In order to achieve this, the electrode material applying apparatus 14 further comprises a tank 43 and a pump 44. The tank 43 is a container retaining the mixture 24. The pump 44 is an apparatus which sends the mixture 24 from the tank 43 to the flow path 14a.

### Flow path 14a

The flow path 14a is a path which allows the flow of slurry containing at least graphite particles dispersed in the solvent. In this embodiment, the flow path 14a is formed so as to extend from the tank 43 to the applying member 14d. The filter 14b is disposed within the flow path 14a. The magnets 14c1 and 14c2 are disposed so as to generate a magnetic field with magnetic lines of force along the flow path 14a on the filter 14b. The filter 14b and the magnets 14c1 and 14c2 constitute a filtering apparatus 50 for filtering the slurry in the electrode material applying apparatus 14.

### Filter 14b

The filter 14b can be a non-woven filter of tangled resin or metal fibers or a mesh filter of woven resin or metal fibers. The size of the meshes of the filter 14b affects the size of the particles which can be removed and the viscosity of the mixture 24 (slurry). In actual practice, appropriate filters may thus be selected according to the mixture 24 (slurry) to be passed through the flow path 14a.

### Magnets 14c1 and 14c2

The magnets 14c1 and 14c2 are the members which generate a magnetic field with magnetic lines of force along the flow path 14a on the filter 14b. In this embodiment, the magnets 14c1 and 14c2 are disposed so as to sandwich the filter 14b along the flow path 14a and are formed of a pair of magnets having magnetic polarities attracting each other at the portions facing the filter 14b. Namely, as shown in Fig. 9, for example, the magnets 14c1 and 14c2 are disposed so that a first magnet serves the south pole for the filter 14b and a second magnet serves the north pole for the filter 14b. The magnets 14c1 and 14c2 may be formed of permanent magnets or electromagnets.

### Filtering apparatus 50

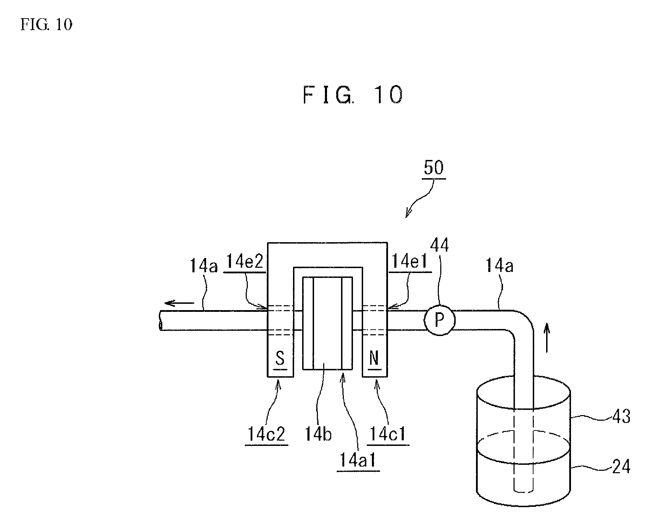

Fig. 10 shows a specific example of the configuration of the flow path 14a, the filter 14b and the magnets 14c1 and 14c2 with regard to the filtering apparatus 50. In the example shown in Fig. 10, the flow path 14a is formed so as to have a space 14a1 (filter disposed space), in which the filter 14b is disposed, having a large inner diameter. The filter 14b has a shape matching to the space 14a1 of the flow path 14a and is disposed at the center of the space 14a1 so as to divide the space 14a1. The magnets 14c1 and 14c2 are arranged at both opposing ends of a steel plate bent into a U-shape. In this embodiment, the magnets 14c1 and 14c2 are provided with, at the center thereof, holes 14e1 and 14e2 through which a pipe serving as the flow path 14a passes. In this embodiment, the magnets 14c1 and 14c2 are permanent magnets. The first magnet 14c1 serves the north pole and the second magnet 14c2 serves the south pole for the filter 14b sandwiched between the magnets 14c1 and 14c2.

The filtering apparatus 50 contains, as shown in Fig. 10, the magnets 14c1 and 14c2 so as to sandwich the filter 14b disposed within the flow path 14a. The first magnet 14c1 serves the north pole and the second magnet 14c2 serves the south pole accordingly. Due to this, the magnets 14c1 and 14c2 generate a magnetic field with magnetic lines of force along the flow path 14a on the filter 14b.

In this embodiment, slurry containing at least graphite particles dispersed in a solvent passes through the flow path 14a. The graphite particles preferably have, for example, a laminar structure in which hexagonal plate-like crystals are stacked so as to form a plurality of layers thereof. For example, natural graphite, artificial graphite, amorphous carbon of natural graphite and artificial graphite and the like are mentioned. In such graphite particles, the planes of the hexagonal plate-like crystals of graphite (interlaminar planes of graphite) tend to be oriented parallel to the magnetic lines of force in the solvent due to the action of the magnetic field. For example, in flake graphite in which graphite layers of hexagonal plate-like crystals are stacked, the interlaminar planes of graphite are aligned, and therefore are prominently tend to be oriented parallel to the magnetic lines of force. Such flake graphite is approximately flat because the hexagonal plate-like crystals are stronger than the interlaminar binding force.

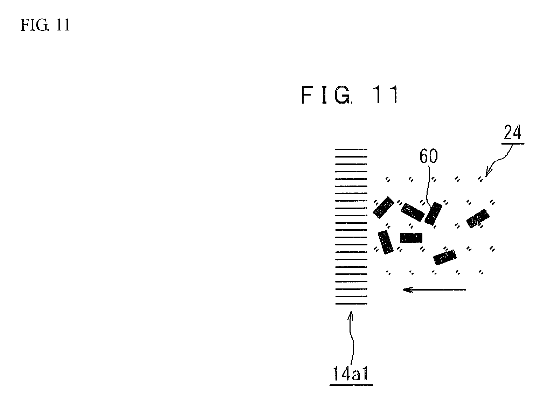

Fig. 11 shows a conceptual view of filtration of slurry (mixture 24) at the filter 14b assuming that the magnets 14c1 and 14c2 are not provided (in other words, the state without the effect of the magnetic field by the magnets 14c1 and 14c2). In this case, there is no magnetic field by the magnets 14c1 and 14c2. Therefore the graphite particles 60 in the mixture 24 are not controlled and are randomly oriented to any directions. Thus when there is no magnetic field by the magnets 14c1 and 14c2, it is difficult for the graphite particles 60 to pass through the filter 14b, causing clogging of the filter.

The mixture 24 (slurry) may produce dilatancy behavior. When the filter 14b selected has fine meshes, shear force generated on the slurry is increased, thereby increasing the resistance upon passage through the filter 14b. When the resistance upon passage through the filter 14b is increased, slurry may not pass through the filter 14b. Accordingly, in order to allow slurry to pass through the filter 14b, the filter 14b needs to have rough meshes.

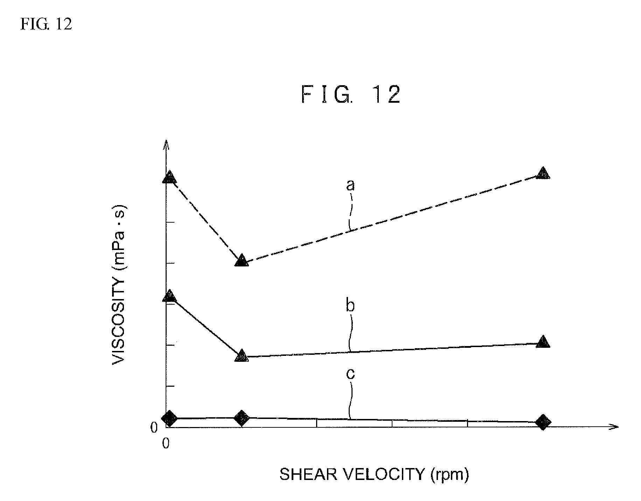

Fig. 12 shows a typical example of dilatancy behavior of slurry. The symbols a, b and c in Fig. 12 show relationships between the shear velocity and the viscosity for different slurry samples, respectively. The slurries a, b and c have different solid content concentrations. The slurries a and b show tendency such that the viscosity is increased with increased shear velocity. The slurry c does not have increased viscosity even when the shear velocity is increased and thus does not exhibit dilatancy behavior. As described above, slurry materials may exhibit dilatancy behavior in some cases.

For example, the negative electrode mixture of lithium-ion secondary batteries is, as described above, a slurry material containing graphite particles 60 dispersed in a solvent. Such a negative electrode mixture may exhibit dilatancy behavior in some cases. The negative electrode mixture exhibiting dilatancy behavior may easily cause clogging of the filter 14b. Particularly flake graphite tends to exhibit dilatancy behavior. Flake graphite has, as described above, an approximately flat shape. It is believed that such flake graphite generates turbulence in a high shear region due to its shape characteristics, easily exhibiting dilatancy behavior. Such flake graphite also has a high projected area in the normal direction of hexagonal plate-like crystals. Particularly when such flake graphite enters the filter 14b in the normal direction of hexagonal plate-like crystals, incidence of clogging is increased. Due to this, slurry containing the graphite particles 60 dispersed in a solvent such as the negative electrode mixture particularly tends to cause clogging at the filter 14b.

### Effects of magnets 14c1 and 14c2

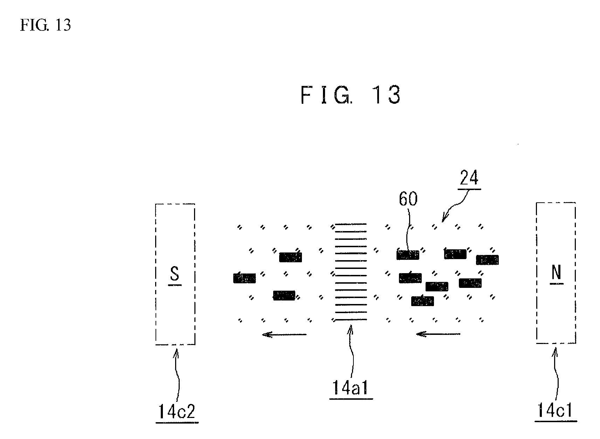

On the other hand, Fig. 13 shows a conceptual view of filtration of slurry through the filter 14b in the filtering apparatus 50. In the filtering apparatus 50, as shown in Fig. 13, the filter 14b is sandwiched between the magnets 14c1 and 14c2. The first magnet 14c1 serves the north pole and the second magnet 14c2 serves the south pole for the filter 14b. Therefore the magnetic field having magnetic lines of force extending along the flow path 14a is generated on the filter 14b. In other words, the magnets 14c1 and 14c2 form the magnetic field having magnetic lines of force extending along the direction which the mixture 24 passes through the filter 14b.

In this situation, the graphite particles 60 are oriented parallel to the magnetic lines of force due to the effect of the magnetic field. Therefore, as shown in Fig. 13, the graphite particles 60 can easily pass through the filter 14b. In the filtering apparatus 50, as shown in Fig. 13, the magnetic field having magnetic lines of force extending along the flow path 14a is generated on the filter 14b. Therefore the graphite particles 60 in slurry are oriented and aligned along the flow path 14a. For example, in flake graphite, the interlayers of hexagonal plate-like crystals are oriented along the magnetic lines of force. This leads to decreased projected area of the graphite particles 60 for flake graphite against the meshes of the filter 14b. The flake graphite enters the filter 14b under this situation, resulting in less clogging of the filter.

In addition, due to the effect of the magnetic field, the orientation of flake graphite is stabilized, which leads to less turbulence even under high shear velocity and to less dilatancy behavior. As described above, according to this filtering apparatus 50, graphite particles 60 in the slurry are oriented along the flow path 14a, and thus the resistance applied to the slurry during passage through the filter 14b is decreased. Because the resistance applied to the slurry during passage through the filter 14b is decreased, dilatancy behavior affects less. Thus the meshes of the filter 14b in the filtering apparatus 50 can be so fine that the slurry can pass through the filter 14b. In the filtering apparatus 50, the resistance applied to the slurry during passage through the filter 14b is low and dilatancy behavior is less exhibited as described above, thereby allowing finer meshes of the filter 14b.

As described above, according to the filtering apparatus 50, the graphite particles 60 in the slurry can pass through the filter 14b easily, allowing finer meshes of the filter 14b. As a result, removal of aggregates and foreign materials in the slurry can be ensured. The extent of orientation of graphite particles 60 in the filtering apparatus 50 depends on, for example, the intensity of the magnetic field generated between the magnets 14c1 and 14c2 or the viscosity of the mixture 24 (slurry) passing through the filtering apparatus 50.

Among these, the viscosity of the slurry is affected by other factors. For example, if the slurry has extremely high viscosity, the slurry does not pass through the filter 14b and further is not discharged at the applying member 14d (e.g. a die). If the slurry has extremely low viscosity, the slurry is dripping during application and thus a predetermined areal amount cannot be maintained. Thus the viscosity of the slurry is adjusted within the range that allows appropriate application. The strength of the magnets 14c1 and 14c2 may be adjusted such that the graphite particles 60 are appropriately oriented in the slurry having a viscosity that allows suitable application.

During production of lithium-ion secondary batteries, the negative electrode mixture may be adjusted so as to have, for example, the viscosity of the slurry of, for example, 500 mPa·sec to 5000 mPa·sec (by E-type viscometer and at 25°C, 2 rpm) and the solid content concentration of about 40 wt% to 60 wt%. In this case, the strength of the magnets 14c1 and 14c2 may be, for example, 1.0 T or more, more preferably 1.5 T or more and still more preferably 2.0 T or more at the position where the filter 14b is situated or the vicinity thereof. The strength of the magnetic field can be measured with a commercially available magnetometer. Such a magnetometer may include, for example, a commercially available magnetometer such as Gaussmeter Model 425 from Lake Shore Cryotronics, Inc..

As described above, the magnets 14c1 and 14c2 may provide the magnetic force having the strength such that the graphite particles 60 in the slurry can be oriented along the magnetic lines of force according to the condition (e.g. viscosity) of the slurry supplied to the flow path 14a.

### Applying member 14d

The applying member 14d applies, as shown in Fig. 9, the mixture 24 (slurry) which has passed through the filter 14b onto the current collector 22. The applying member 14d which may be used is, for example, a slit coater, a gravure coater, a die coater, a comma coater and the like. The applying member 14d of the electrode material applying apparatus 14 is supplied with the mixture 24 which has passed through the filtering apparatus 50 as shown in Fig. 10. As described above, in the filtering apparatus 50, the filter 14b can have finer meshes, thereby allowing more appropriate removal of aggregates and foreign materials in slurry. Because aggregates and foreign materials in slurry can be more appropriately removed according to the electrode material applying apparatus 14, the applying member 14d has decreased clogging of the slurry. Accordingly, the current collector 22 onto which the mixture 24 is applied has less coating stripes and decreased defects are produced during production of secondary batteries.

As described above, in the electrode material applying apparatus 14, as shown in Fig. 9, the mixture 24 retained in the tank 43 is aspirated with the pump 44 and supplied to the flow path 14a. The mixture 24 is filtered by the filtering apparatus 50 disposed in the flow path 14a and supplied through a die 42 to the surface of the current collector 22 supported by the back roll 41. The current collector 22 onto which the mixture 24 has been applied passes through the drying furnace 16 in order to dry the mixture 24 and is collected at the collecting member 34.

The electrode material applying apparatus 14 according to one embodiment of the present invention has been described hereinabove. However, the electrode material applying apparatus 14 is not limited to the above embodiment.

### Other modes

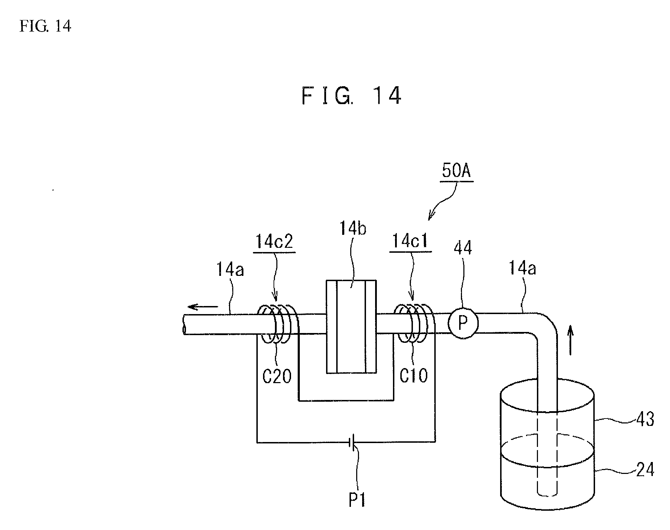

The magnets 14c1 and 14c2 in the filtering apparatus 50 have been exemplified by permanent magnets. The magnets 14c1 and 14c2 which are permanent magnets do not require electric power, resulting in a reduced running cost. However, the magnets 14c1 and 14c2 in the filtering apparatus 50 may be formed of electromagnets. Fig. 14 shows an example of the configuration of a filtering apparatus (filtering apparatus 50A) including magnets 14c1 and 14c2 which are electromagnets. In the example shown in Fig. 14, the flow path 14a is provided with at upstream and downstream of the filter 14b, respectively, coils C10 and C20 which serve as electromagnets. The coils C10 and C20 are connected to a power supply P1 so as to have opposite magnetic polarities for the filter 14b (e.g. when a first magnet serves the north pole, a second magnet serves the south pole for the filter 14b). The power supply P1 may be a direct-current power supply or an alternating-current power supply.

As described above, the magnets 14c1 and 14c2 maybe formed of electromagnets. When the magnets 14c1 and 14c2 are electromagnets, the magnetic force of the magnets 14c1 and 14c2 can be adjusted by adjusting the current applied to the coils C10 and C20. Not just for the magnets 14c1 and 14c2 described above, specific configurations of, for example, the flow path 14a, the filter 14b, the magnets 14c1 and 14c2 or the applying member 14d of the electrode material applying apparatus 14 are not limited to the embodiment described above and can be variously modified.

According to the above embodiment, the mixture 24 is continuously applied on the current collector 22 while it travels in the form of foil or sheet (strip-shaped). The step of applying the mixture 24 on the current collector 22 is not limited to this mode. For example, the mixture 24 may be applied with various modes, for example, may be poured on the current collector 22 and extended or may be applied by printing.

The above electrode material applying apparatus 14 comprises, as shown in Fig. 10 for example, the filtering apparatus 50 for filtering the mixture 24 which comprises the filter 14b disposed in the flow path 14a and the magnets 14c1 and 14c2 disposed so as to generate a magnetic field having magnetic lines of force extending along the flow path on the filter 14b. In the filtering apparatus 50, for example, the filter 14b can have fine meshes for filtering slurry containing at least graphite particles dispersed in a solvent. Accordingly finer aggregates and foreign materials contained in the slurry can be removed. Thus the mixture 24 which contains less contaminated aggregates and foreign materials and is more uniform can be applied. In this case, regardless of the structure of the applying member 14d, more stable electrode sheets can be provided and this contributes to the improvement in performance of secondary batteries.

A novel filtering method is proposed herein for slurry (mixture 24 in this embodiment) containing at least graphite particles dispersed in a solvent. Namely, slurry (mixture 24 in this embodiment) containing at least graphite particles dispersed in a solvent is preferably filtered by, for example, supplying the slurry (mixture 24) to a flow path 14a while generating a magnetic field having magnetic lines of force extending along the flow path on a filter 14b disposed in the flow path 14a. This filtration method allows removal of finer aggregates and foreign materials in the slurry. In addition, the particles to be contained in the slurry can be more uniform. According to this filtration method, the slurry during filtration may be less affected by dilatancy behavior. Accordingly less pressure can be applied to the slurry in order to pass it through the filter 14b when the mesh size of the filter 14b is similar to that in the conventional methods. This allows miniaturization of facilities such as a pump for supplying slurry and reduction in energy required for driving the pump, resulting in reduction in the cost for facilities and the running cost. The filtration method can be, as described above, widely applied to the method for producing secondary batteries including the step of applying the slurry to a current collector.

A filtering apparatus 50 for realizing the filtration method may include, as shown in Figs. 10 and 14 for example, a flow path 14a, a filter 14b disposed in the flow path 14a and magnets 14c1 and 14c2 disposed so as to generate a magnetic field having magnetic lines of force extending along the flow path 14a on the filter 14b. In this case, the magnets 14c1 and 14c2 may be formed of a pair of magnets sandwiching the filter 14b along the flow path 14a. In this case, the magnets 14c1 and 14c2 preferably have magnetic polarities attracting each other at the portions facing the filter 14b. The magnets 14c1 and 14c2 may be permanent magnets or electromagnets.

A preferable application has been exemplified by the step of filtering a negative electrode mixture for lithium-ion secondary batteries. However, the filtering apparatus 50 has broader applications which are not limited to the above application. The negative electrode mixture for lithium-ion secondary batteries may contain a high percentage of graphite particles 60 in the mixture and thus may be highly benefited by the filtering apparatus 50. A positive electrode mixture for lithium-ion secondary batteries, for example, may contain graphite particles as conducting materials. Therefore the filtering apparatus 50 may be used for filtering such a positive electrode mixture.

The electrode material applying apparatus, the filtering apparatus, the method for filtering slurry and the method for producing a secondary battery according to embodiments of the present invention have been described hereinabove. The embodiments exemplified herein are application of the present invention to a method for producing a lithium-ion secondary battery. The present invention is however not limited to any of the embodiments described hereinabove unless stated otherwise.

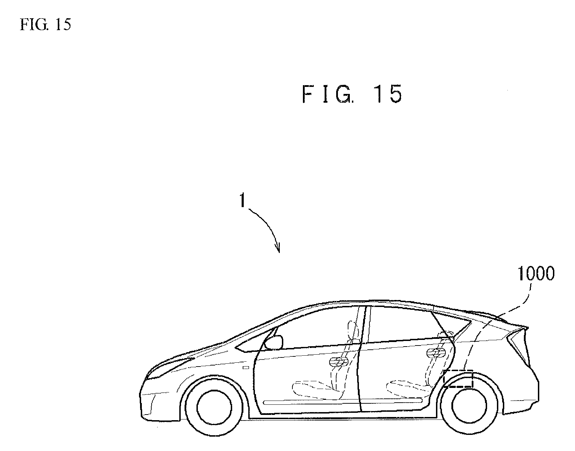

As described above, the present invention may contribute to the improvement in power of secondary batteries (e.g. lithium-ion secondary batteries). Thus the present invention is suitable for a method for producing lithium-ion secondary batteries for vehicle driving power supplies such as driving batteries for hybrid vehicles and electric vehicles which are required to have high output characteristics at high rate and high cycle characteristics. Namely, the lithium-ion secondary battery may be, as shown in Fig. 15, suitably used as a battery 1000 for driving a motor (electric motor drive) of a vehicle 1 such as an automobile. The vehicle driving battery 1000 may be an assembled battery containing a plurality of secondary batteries.

### Reference Signs List

- 12: Traveling path
- 14: Electrode material applying apparatus
- 14a: Flow path
- 14a1: Filter disposed space
- 14b: Filter
- 14c1, 14c2: Magnet
- 14d: Applying member
- 14e1, 14e2: Hole for passing through the flow path 14a
- 16: Drying furnace
- 22: Current collector
- 24: Mixture
- 32: Supply member
- 32a: Core
- 34: Collecting member
- 34a: Core
- 34b: Controller
- 34c: Motor
- 41: Back roll
- 42: Die
- 43: Tank
- 44: Pump
- 50, 50A: Filtering apparatus
- 60: Graphite particle
- 100: Lithium-ion secondary battery
- 200: Wound electrode assembly
- 220: Positive electrode sheet
- 221: Positive electrode current collector
- 222: Uncoated part
- 222a: Middle part
- 223: Positive electrode mixture layer
- 224: Positive electrode mixture
- 240: Negative electrode sheet
- 241: Negative electrode current collector
- 242: Uncoated part
- 243: Negative electrode mixture layer
- 244: Negative electrode mixture
- 245: Heat-resistant layer
- 262: Separator
- 264: Separator
- 280: Electrolyte
- 290: Charger
- 300: Battery case
- 310: Gap
- 320: Case body
- 322: Joining part of the lid and the case body
- 340: Lid
- 360: Safety valve
- 420: Electrode terminal (positive electrode)
- 440: Electrode terminal (negative electrode)
- 610: Positive electrode active material
- 620: Conducting material
- 630: Binder
- 710: Negative electrode active material
- 730: Binder
- 1000: Vehicle driving battery
- C10, C20: Coil

## Claims

1. An electrode material applying apparatus (14) comprising:
a flow path (14a) which allows passage of slurry (24) containing at least graphite particles (60) dispersed in a solvent,
wherein
the graphite particles (60) have a laminar structure in which hexagonal plate-like crystals are stacked so as to form a plurality of layers thereof;
a filter (14b) disposed in the flow path (14a);
a magnet (14c1, 14c2) disposed so as to generate, on the filter (14b), a magnetic field having magnetic lines of force extending along the flow path (14a), thereby orienting planes of the crystals of the graphite particles (60) having the laminar structure parallel to the magnetic lines of force; and
an applying member (14d) which applies, on a current collector (22), the slurry (24) having passed through the filter (14b),
**characterized in that**
the magnetic field leads to a decreased projected area of the graphite particles (60) against the meshes of the filter (14b) compared to absence of the magnetic field.

2. The electrode material applying apparatus (14) according to claim 1, wherein
the magnet (14c1, 14c2) is formed of a pair of magnets (14c1, 14c2) which are disposed so as to sandwich the filter (14b) along the flow path (14a) and respectively have magnetic polarities attracting each other at portions facing the filter (14b).

3. The electrode material applying apparatus (14) according to claim 1 or 2, wherein
the flow path (14a) allows passage of slurry containing a flake-like graphite (60).

4. The electrode material applying apparatus (14) according to any one of claims 1 to 3, wherein
the magnet (14c1, 14c2) is formed of a permanent magnet or an electromagnet.

5. A method for filtering slurry by supplying slurry (24) containing at least graphite particles (60) dispersed in a solvent to a flow path (14a) while generating, on a filter (14b) disposed in the flow path (14a), a magnetic field having magnetic field lines extending along the flow path (14a), the graphite particles (60) having a laminar structure in which hexagonal plate-like crystals are stacked so as to form a plurality of layers thereof, thereby orienting planes of the crystals of the graphite particles (60) having the laminar structure parallel to the magnetic field lines to filter the slurry (24),
**characterized in that**
the magnetic field leads to a decreased projected area of the graphite particles (60) against the meshes of the filter (14b) compared to absence of the magnetic field.

6. A method for producing a secondary battery, comprising:
filtering slurry (24) by the method for filtering slurry according to claim 5; and
applying, on a current collector (22), the slurry (24) filtered.

## Patentansprüche

1. Elektrodenmaterial-Aufbringungsvorrichtung (14) mit:
einem Strömungsweg (14a), der den Durchgang einer Aufschlämmung (24) erlaubt, die zumindest in einem Lösungsmittel verteilte Graphitpartikel (60) enthält,
wobei
die Graphitpartikel (60) eine flächenförmige Struktur haben, bei der hexagonale tafelartige Kristalle so aufgestapelt sind, dass sie daraus eine Vielzahl von Schichten ausbilden;
einem Filter (14b), der in dem Strömungsweg (14a) angeordnet ist;
einem Magnet (14c1, 14c2), der so angeordnet ist, dass er auf dem Filter (14b) ein Magnetfeld erzeugt, das magnetische Kraftlinien hat, die sich entlang des Strömungswegs (14a) erstrecken, wodurch Ebenen der Kristalle der Graphitpartikel (60), die die flächenförmige Struktur haben, parallel zu den magnetischen Kraftlinien orientiert werden; und
einem Aufbringungselement (14d), das die durch den Filter (14b) gegangene Aufschlämmung (24) auf einem Stromkollektor (22) aufbringt,
**dadurch gekennzeichnet, dass**
das Magnetfeld verglichen mit einer Abwesenheit des Magnetfelds zu einer geringeren Projektionsfläche der Graphitpartikel (60) gegenüber den Maschen des Filters (14b) führt.

2. Elektrodenmaterial-Aufbringungsvorrichtung (14) nach Anspruch 1, wobei
der Magnet (14c1, 14c2) aus einem Paar Magneten (14c1, 14c2) ausgebildet ist, die so angeordnet sind, dass sie den Filter (14b) entlang des Strömungswegs (14a) zwischen sich nehmen, und jeweils magnetische Polaritäten haben, die einander an Abschnitten, die dem Filter (14b) zugewandt sind, anziehen.

3. Elektrodenmaterial-Aufbringungsvorrichtung (14) nach Anspruch 1 oder 2, wobei
der Strömungsweg (14a) den Durchgang einer Aufschlämmung erlaubt, die einen schuppenartigen Graphit (60) enthält.

4. Elektrodenmaterial-Aufbringungsvorrichtung (14) nach einem der Ansprüche 1 bis 3, wobei
der Magnet (14c1, 14c2) aus einem Permanentmagneten oder einem Elektromagneten ausgebildet ist.

5. Verfahren zum Filtern einer Aufschlämmung, indem einem Strömungsweg (14a) eine Aufschlämmung (24) zugeführt wird, die zumindest in einem Lösungsmittel verteilte Graphitpartikel (60) enthält, während auf einem Filter (14b), der in dem Strömungsweg (14a) angeordnet ist, ein Magnetfeld erzeugt wird, das magnetische Feldlinien hat, die sich entlang des Strömungswegs (14a) erstrecken, wobei die Graphitpartikel (60) eine flächenförmige Struktur haben, bei der hexagonale tafelartige Kristalle so aufgestapelt sind, dass sie daraus eine Vielzahl von Schichten ausbilden, wodurch Ebenen der Kristalle der Graphitpartikel (60), die die flächenförmige Struktur haben, parallel zu den magnetischen Feldlinien orientiert werden, um die Aufschlämmung (24) zu filtern,
**dadurch gekennzeichnet, dass**
das Magnetfeld verglichen mit einer Abwesenheit des Magnetfelds zu einer geringeren Projektionsfläche der Graphitpartikel (60) gegenüber den Maschen des Filters (14b) führt.

6. Verfahren zur Herstellung einer Sekundärbatterie, mit:
Filtern einer Aufschlämmung (24) durch das Verfahren zum Filtern einer Aufschlämmung gemäß Anspruch 5; und
Aufbringen der gefilterten Aufschlämmung (24) auf einem Stromkollektor (22).

## Revendications

1. Appareil d'application d'un matériau d'électrode (14) comprenant :
un chemin d'écoulement (14a) qui permet le passage de boue (24) contenant au moins des particules de graphite (60) dispersées dans un solvant,
dans lequel
les particules de graphite (60) ont une structure laminaire dans laquelle des cristaux semblables à des plaques hexagonales sont empilés de façon à former une pluralité de couches correspondantes ;
un filtre (14b) disposé dans le chemin d'écoulement (14a) ;
un aimant (14c1, 14c2) disposé de façon à générer, sur le filtre (14b), un champ magnétique ayant des lignes de force magnétiques s'étendant le long du chemin d'écoulement (14a), en orientant ainsi les plans des cristaux des particules de graphite (60) ayant une structure laminaire parallèle aux lignes de force magnétiques, et
un élément d'application (14d) qui applique, sur un collecteur de courant (22), la boue (24) passée à travers le filtre (14b),
**caractérisé en ce que**
le champ magnétique mène à une zone projetée réduite des particules de graphite (60) contre les mailles du filtre (14b) par rapport à l'absence du champ magnétique.

2. Appareil d'application d'un matériau d'électrode (14) selon la revendication 1, dans lequel
l'aimant (14c1, 14c2) est constitué d'une paire d'aimants (14c1, 14c2) qui sont disposés de façon à prendre le filtre (14b) en sandwich le long du chemin d'écoulement (14a) et respectivement avoir des polarités magnétiques s'attirant l'une l'autre dans des parties faisant face au filtre (14b).

3. Appareil d'application d'un matériau d'électrode (14) selon la revendication 1 ou 2, dans lequel
le chemin d'écoulement (14a) permet le passage de boue contenant du graphite semblable à des flocons (60).

4. Appareil d'application d'un matériau d'électrode (14) selon l'une quelconque des revendications 1 à 3, dans lequel
l'aimant (14c1, 14c2) est constitué d'un aimant permanent ou d'un électro-aimant.

5. Procédé de filtration de boue en fournissant de la boue (24) contenant au moins des particules de graphite (60) dispersées dans un solvant vers un chemin d'écoulement (14a) tout en générant, sur un filtre (14b) disposé dans le chemin d'écoulement (14a), un champ magnétique ayant des lignes de champ magnétique s'étendant le long du chemin d'écoulement (14a), les particules de graphite (60) ayant une structure laminaire, dans laquelle des cristaux semblables à des plaques hexagonales sont empilés de façon à former une pluralité de couches correspondantes, en orientant ainsi les plans des cristaux des particules de graphite (60) ayant la structure laminaire parallèle aux lignes de champ magnétique pour filtrer la boue (24),
**caractérisé en ce que**
le champ magnétique mène à une zone projetée réduite des particules de graphite (60) contre les mailles du filtre (14b) par rapport à l'absence du champ magnétique.

6. Procédé de production d'une batterie secondaire, omprenant :
la filtration de la boue (24) par le procédé de filtration de boue selon la revendication 5 ; et
l'application, sur un collecteur de courant (22), de la boue (24) filtrée.
